# EUROPEAN PATENT SPECIFICATION

(11) **EP 2 094 452 B1**
(45) Date of publication and mention of the grant of the patent: **13.02.2013**
(21) Application number: 07860633.2
(22) Date of filing: 30.11.2007
(51) Int. Cl.: B25J 19/00, G05D 1/02

(54) **SURROUNDINGS MAPPING APPARATUS CAPABLE OF APPLYING QUICKLY CHANGED SURROUNDINGS INFORMATION IN MOBILE ROBOT AND METHOD THEREOF**
UMGEBUNGSKARTIERUNGSGERÄT MIT ANWENDUNG SCHNELL GEÄNDERTER UMGEBUNGSINFORMATIONEN IN EINEM MOBILEN ROBOTER UND VERFAHREN
APPAREIL DE REPRÉSENTATION D'UN ENVIRONNEMENT PERMETTANT D'APPLIQUER DES INFORMATIONS CONCERNANT UN ENVIRONNEMENT RAPIDEMENT MODIFIÉ DANS UN ROBOT MOBILE ET PROCÉDÉ ASSOCIÉ

(30) Priority: 08.12.2006 KR 20060124884
(43) Date of publication of application: 02.09.2009
(73) Proprietor: Electronics and Telecommunications Research Institute, Daejeon 305-350 (KR)
(72) Inventor: LEE, Yu Cheol, Namdong-gu Incheon 405-280 (KR); YU, Won Pil, Nam-gu Ulsan 680-010 (KR); NA, Sang Ik, Yuseong-gu Daejeon 305-350 (KR); AHN, Hyo-Sung, Seo-gu Daejeon 302-818 (KR)
(74) Representative: Betten & Resch
(86) International application number: PCT/KR2007/006125
(87) International publication number: WO 2008/069498

(56) References cited:
- WO-A2-03/039314
- KR-A- 20050 024 840
- KR-A- 20050 028 859
- KR-B1- 100 656 859
- US-A1- 2004 162 638
- US-A1- 2005 216 126
- LEONARD J ET AL: "Dynamic Map Building for Autonomous Mobile Robot", 1990 IEEE INTERNATIONAL WORKSHOP ON INTELLIGENT ROBOTS AND SYSTEMS, IEEE, US, vol. 1, 3 July 1990 (1990-07-03), pages 89-96, XP008109431, DOI: 10.1109/IROS.1990.262373
- BANK D.: 'A Novel Ultrasonic Sensing System for Autonomous Mobile Systems' IEEE SENSORS JOURNAL vol. 2, no. 6, December 2002, pages 597 - 606, XP002962394
- LEONARD J. ET AL.: 'Dynamic Map Building for Autonomous Mobile Robot' 1990 IEEE INTERNATIONAL WORKSHOP ON INTELLIGENT ROBOTS AND SYSTEMS. IEEE vol. 1, 03 July 1990 - 06 July 1990, pages 89 - 96, XP008109431

## Description

### Technical Field

The present invention relates to a method of making an indoor environment map, and more particularly, to a method of quickly responding to environmental change using a mobile apparatus such as a mobile robot and making an environment map of a corresponding region and an apparatus to perform the method.

This work was supported by the IT R&D program of MIC/IITA[2005-S-033-02, Embedded Component Technology and Standardization for URC]

### Background Art

In general, a mobile apparatus such as an autonomous mobile robot has to have a capability of self-managing an unknown environment without the knowledge about the unknown environment. The mobile apparatus is widely used in various fields. For example, the autonomous mobile robot carries out operations of assisting handicapped persons, and transporting products in factories, and a dangerous work such as space exploration, work in a nuclear waste dumpsite and a deep sea, and the like, instead of human. Furthermore, the autonomous mobile robot can be used as an unmanned cleaner, an unmanned mower, and the like.

The autonomous mobile robot serving the above-mentioned operations is expected to provide a affluent life to persons and a high value-added market to enterprises by industrializing the autonomous mobile robot.

However, since the mobile apparatus such as the autonomous mobile robot has inferior cognitive and reasoning ability in comparison with those of human up to now, functions to show the cognitive ability and the reasoning ability (inference) are very restricted. Thus, researches are being carried out to improve intelligence of a robot in more various fields.

First of all, the most fundamental function of the mobile apparatus such as the autonomous mobile robot is to move to a target spot without collision. In order for the autonomous mobile robot to move freely without collision, it has to be able to recognize its location by itself. These functions depend on a localization test technology and a mapping technology.

So, the autonomous mobile robot needs map information for its surrounding environment and the map information can guide it to determine entire positions and contours of objects and to make optimal traveling paths and to travel to the desired target spot without collision. This map information refers to an environment map of a mobile apparatus.

Distance measuring sensors such as an ultrasonic sensor, a laser sensor, and an infrared sensor are used for the mobile apparatus to acquire the environment map. The environment map acquired by the above-mentioned sensors is roughly divided into two types.

The first type may be a feature-based map. This feature-based mapping is a method for conveying the surrounding environment as specific features such as a line, a point, and an arc. A RCD(region of constant depth) method, proposed by Leonard, Massachusetts Institute of Technology (MIT), United States, is most generally used as this feature-based mapping method. This method is that a mobile apparatus obtains several distance measurement values from a single specific position to extract RCDs and makes the shape in the relation to those values.

As the other type of the feature-based map, Christensen of Royal Institute of Technology, Sweden, has developed a Triangulation-Based Fusion (TBF) model. The TBF is a method of expressing information of a distance measuring sensor in the form of beam and obtaining points of intersection between several beams to extract a reliable point shape.

Moreover, Choset of Carnegie Mellon University, United States of America, has developed an Arc Transversal Medium Model to extract a high reliable point shape. And, Kleenman and Kuc of Monarch University, Australia, have manufactured a new rotating distance measuring sensor system that obtains a position of an object to express a shape-based map distinguishing surfaces and corners, the sensor system includes three receiving units and three transmitting units which are disposed at regular intervals and obtains high density measurement values while rotating so that the environment can be easily recognized. However, this method has a lot of difficulties in application and use of it in comparison to a fixed type sensor system due to the complicated sensor information process.

The second type for expressing the environment map is an occupancy grid-based map. This was proposed by Moravec and Elfs of Carnegie Mellon University, United States of America. This is to divide the surrounding environment of a mobile apparatus into a small sized grid and to express the probability that an object exists in each grid. It also refers to an occupancy probability grid map. The early occupancy probability grid map has a drawback such that the quality of map gets declining as same relative importance is placed both on accumulated information and new information. In order to compensate for the above limitation, Moravec and Cho have developed a Baysian Model using Bayes probability theory.

LEONARD J ET AL: "Dynamic Map Building for Autonomous Mobile Robot", 1990 IEEE INTERNATIONAL WORKSHOP ON INTELLIGENT ROBOTS AND SYSTEMS, IEEE, US, vol. 1, 3 July 1990 (1990-07-03), pages 89-96 describes an algorithm for autonomous map building and maintenance for a mobile robot. With each geometric target in the map a validation measure is associated to represent a belief in the validity of the target, in addition to the usual covariance matrix to represent a spatial uncertainty. At each position update cycle, predicted features are generated for each target in the map and compared to features actually observed. Successful matches to targets with a high validation measure are used for localisation.

As described above, the feature-based map and the grid-based map are focused on more precisely mapping the surrounding environment. As such, persons who are developing an environment map generating method using a distance measuring sensor are proposing various methods such as the feature-based map, the grid-based map, and the like for the more precise environment map.

### Disclosure of Invention

### Technical Problem

Therefore, the present invention has been made in view of the above problems, and it is an aspect of the present invention to provide a method for more precisely and immediately building an environment map by a mobile apparatus such as a mobile robot and an apparatus thereof.

It is another aspect of the present invention to provide a method for more rapidly building an environment map responding to environmental change using a mobile apparatus such as a mobile robot and an apparatus thereof.

It is still another aspect of the present invention to provide a method for more rapidly renewing an environment map in response to the movement of the mobile apparatus which occurs within the environment map and an apparatus thereof.

### Technical Solution

In accordance with an aspect of the present invention, the above and other aspects can be accomplished by the provision of an apparatus for building an environment map of a mobile apparatus as defined in claim 1 and a method for building an environment map as defined in claim 9. The dependent claims describe further advantageous embodiments of the invention.

### Advantageous Effects

As described above, according to the present invention, a mobile apparatus measures a distance from itself to an moving object during traveling and builds an environment map based on the measured distance and detects the movement of the moving object. By doing so, the mobile apparatus obtains changed environment information including the movement of the moving object to renew the environment map by applying the changed environment information to the built environment map so that the environment map to which the changed environment information within a region of the environment map is more rapidly applied can be precisely built by using a mobile apparatus.

### Brief Description of the Drawings

The above and other objects, features and other advantages of the present invention will be more clearly understood from the following detailed description taken in conjunction with the accompanying drawings, in which:

FIG. 1 is a block diagram illustrating a mobile apparatus to more rapidly build an environment map reflecting the environmental change according to an embodiment of the present invention;

FIG. 2 is a view illustrating an example of a mobile apparatus to more rapidly build an environment map reflecting the environmental change according to the embodiment of the present invention, depicted in FIG. 1;

FIG. 3 is a view illustrating an example in which the mobile apparatus according to the embodiment of the present invention measures distance of an moving object for the generation of the environment map using a distance measuring unit;

FIG. 4 is a view illustrating an example of detecting a moving object moved by sensing a dynamic environmental change in the embodiment of the present invention;

FIG. 5 is a view illustrating an example of detecting a movement of a moving object in the embodiment of the present invention;

FIG. 6 is a view illustrating an example of renewing the built environment map by applying the changed environment information in the embodiment of the present invention; and

FIG. 7 is a flowchart illustrating a method of rapidly and precisely building an environment map by adapting environmental change according to another embodiment of the present invention.

### Best Mode for Carrying Out the Invention

Hereinafter, the embodiments of the present invention will be described in detail with reference to accompanying drawings. It is noted that although similar components are depicted in different drawings, same reference numerals are assigned to the similar components if possible. Moreover, in the following description of the present invention, if it is determined that the detailed description of already known components or functions related to the present invention may confuse the subject matter of the present invention, the detailed description will be omitted.

The present invention proposes a method of more effectively building an environment map using a mobile apparatus such as a mobile robot mounted with a mobile apparatus guiding device to transport the mobile apparatus and a distance measuring sensor such as an ultrasonic sensor, a laser sensor, an infrared sensor. Moreover, the present invention proposes a method of more rapidly renewing the environment map in response to environmental changes. As such, the environment map that is more rapidly updated according to the environmental changes can be applied various technologies based on indoor map information such as traveling of a mobile apparatus in an indoor circumstance, logistics, resource management and tracking.

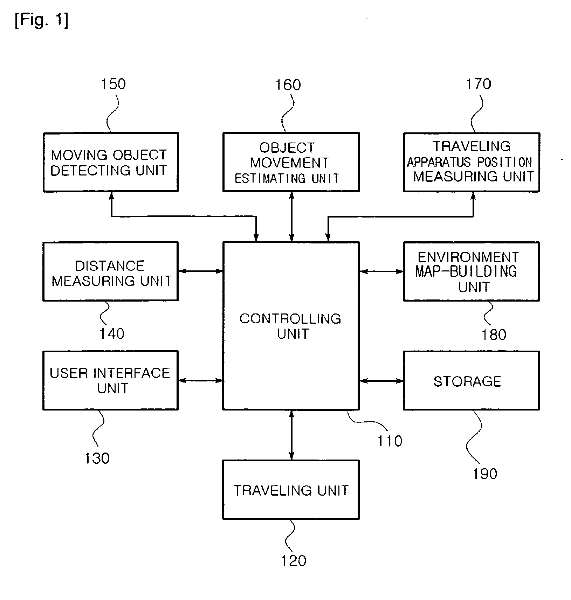

FIG. 1 is a block diagram illustrating a mobile apparatus to more rapidly build an environment map reflecting the environmental change according to an embodiment of the present invention.

In this embodiment of the present invention, the mobile apparatus will be described by an example of an autonomous mobile robot.

As illustrated, the mobile apparatus 100 comprises a controlling unit 110, a traveling unit 120, a user interface unit 130, a distance measuring unit 140, a moving object detecting unit 150, an object movement estimating unit 160, a mobile apparatus position measuring unit 170, an environment map-generating unit 180, and a storage 190.

The controlling unit 110 controls overall operation of the mobile apparatus and operation required to build the environment map according to this embodiment of the present invention.

The traveling unit 120 carries out operation to travel the mobile apparatus 100 by the control of the controlling unit 110 and carries out operation to move the mobile apparatus 100 to a desired region for the building of the environment map according to this embodiment of the present invention.

The user interface unit 130 carries out operation of outputting result information due to the movement of the mobile apparatus 100 and of collecting command information provided by a user.

The distance measuring unit 140 measures a distance to an object positioned in the surroundings where the mobile apparatus 100 is positioned. At this time, the controlling unit 110 controls the traveling unit 120 such that the mobile apparatus 100 travels in the total region whose environment map will be built. The distance measuring unit 140 in this embodiment of the present invention can be applied by an ultrasonic sensor, an infrared sensor, a laser sensor, and the like.

By doing so, the environment map-building unit 180 builds the environment map of entire corresponding region based on the distance measured by the distance-measuring unit 140 while the mobile apparatus 100 travels using the traveling unit 120. In this case, the environment map-building unit 180 builds the environment map using an environment map-building program stored in the storage 190.

The moving object detecting unit 150 compares the environment map built by the environment map-building unit 180 with an object detecting measurement value on total region of the environment map measured by the distance measuring unit 140 to detect the moving object in the overall region of the environment map.

The object movement estimating unit 160 determines whether the moving object detected by the moving object detecting unit 150 is moved. In the embodiment of the present invention, the object movement detecting unit 160 may be implemented by a radio detector.

The mobile apparatus position measuring unit 170 measures an absolute position of the mobile apparatus 100. The position information of the mobile apparatus 100 measured as described above becomes a reference position for the measurement of a distance to a corresponding object when building the environment map. In the embodiment of the present invention, the mobile apparatus position measuring unit 170 may be implemented by an artificial landmark detector to estimate a position of the mobile apparatus 100.

On the other hand, if the moving object is not detected from the built environment map, the controlling unit 110 carries out a corresponding operation based on the built environment map.

On the contrary, when the movement of the moving object is detected, the controlling unit 110 determine whether to directly update the environment map through the user interface unit 130. And, if a command of a user is received, the controlling unit 110 updates the environment map responding to the command of the user. Specifically, when a command in which the user directly updates the environment map is inputted, the controlling unit 110 controls the environment map building unit 180 to update the environment map such that environment information changed according to the movement of the moving object is applied to the environment in accordance with the inputted command. When the command to directly update the map is not inputted from the user, the controlling unit 110 controls the traveling unit 100 and the distance measuring unit 140 to collect the environment information changed due to the movement of the moving object and controls the environment map building unit 180 to update the environment map based on the collected environment information.

Thus, the mobile apparatus travels to measure the distance to the moving object and builds the environment map based on the measured distance. Also, the mobile apparatus detects whether or not the moving object is moved and collects the environment information changed by the detected movement of the moving object to apply the changed environment information to the built environment map and to update the environment map so that the environment map to which the changed environment information in the environment map region is promptly and precisely applied can be built

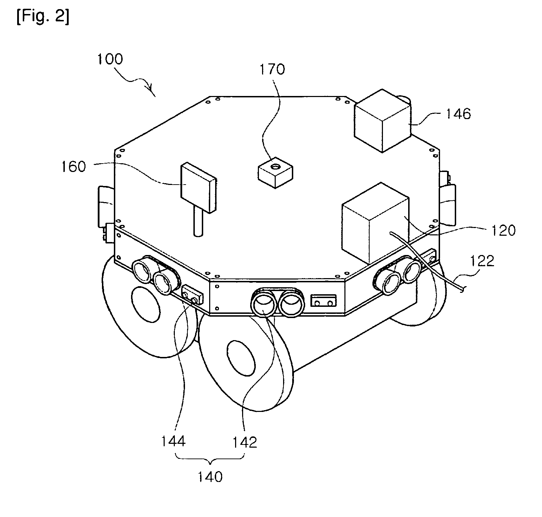

FIG. 2 is a view illustrating an example of a mobile apparatus to more rapidly build an environment map reflecting the environmental change according to the embodiment of the present invention, depicted in FIG. 1;

As illustrated, the mobile apparatus 100 includes the traveling unit 120 installed at an upper side thereof, a cable 122 to control the traveling unit 120, a distance measuring unit 140 such as an ultrasonic sensor 142 and an infrared sensor 144 which are mounted on sides of the mobile apparatus 100, and such as a laser sensor 146 mounted on an upper side of the mobile apparatus 100. Moreover, the mobile apparatus 100 further comprises the mobile apparatus position measuring unit 170 such as an artificial landmark detector which is installed on the upper side of the mobile apparatus 100 to estimate the position of the mobile apparatus 100 and further comprises the object movement detecting unit 160 installed on the upper side of the mobile apparatus 100 such as a radio detector which can detect a specific radio tag such as a radio frequency identification (RFID), a ZigBee.

As illustrated in FIG. 2, the traveling unit 120 is positioned to be directed toward the front side of the mobile apparatus 100 so that it is convenient to control the mobile apparatus 100 when the traveling unit 120 is used. Moreover, the distance measuring unit 140 such as laser sensor 146 is preferably disposed at the upper outer side of the mobile apparatus 100 in order to prevent the laser sensor 146 of the distance measuring unit 140 from being screened by a user who controls the traveling unit 120. Since the ultrasonic sensor 142 and the infrared sensor 144 are cheap, it is preferable that plural ultrasonic sensor 142 and infrared sensor 144 are evenly disposed at the side of the mobile apparatus 100 to widely measure a distance.

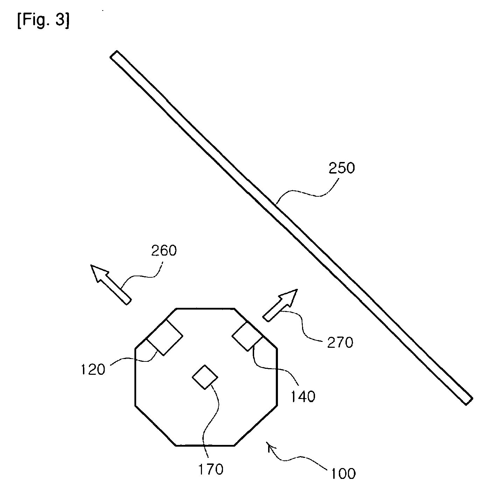

FIG. 3 is a view illustrating an example in which the mobile apparatus 100 according to the embodiment of the present invention measures distance information from an object for the generation of the environment map using the distance measuring unit 140.

As illustrated, when the mobile apparatus 100 is moved by the traveling unit 120 in the directions indicated by arrows, it is preferable that, in order to rapidly build the environment map, the mobile apparatus 100 is controlled to travel in the direction 260 perpendicular to the direction which the mobile apparatus 100 faces an object 250 which will be included in the environment map.

In this embodiment, the distance measuring unit 140 is preferably mounted at the side of the mobile apparatus 100 in the direction 270 perpendicular to the object 250 such that the distance measuring unit 140 easily and precisely detects the object 250 without imprecise distance measurement caused by using the traveling unit 120 to rapidly traveling the mobile apparatus 100. In this case, in order to precisely detect the position of the mobile apparatus 100, it is possible to mount the artificial landmark detector as the mobile apparatus position measuring unit 170 to estimate a position of the mobile apparatus 100.

By doing so, the environment map-building unit 180 can built the environment map based on the distance measurement of the object 250 collected in such a way as illustrated in FIG. 3.

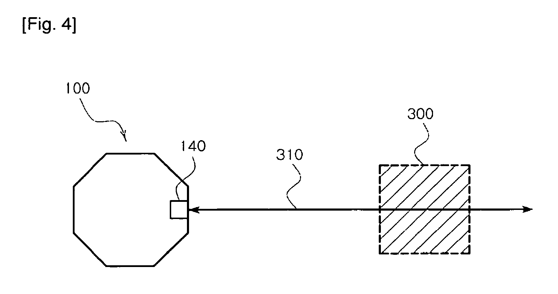

FIG. 4 is a view illustrating an example of detecting a moving object moved by sensing a dynamic environmental change in the embodiment of the present invention;

As illustrated, the mobile apparatus 100 includes a distance measuring unit 140 such as the ultrasonic sensor 142, the laser sensor 144, and the infrared sensor 146. In this case, the distance measuring unit 140 measures a distance 310 from the mobile apparatus 100 to an object 300.

In this embodiment, the moving object detecting unit 150 compares the distance 310 from the mobile apparatus 100 to the object 300 measured by the distance measuring unit 140 with a distance L from the mobile apparatus 100 to the object 300 read from the environment map built by the environment map-building unit 180.

In this case, when the measured distance 310 does not correspond to the distance L of the environment map, the moving object detecting unit 150 estimates that the object 300 moves in dynamic circumstances.

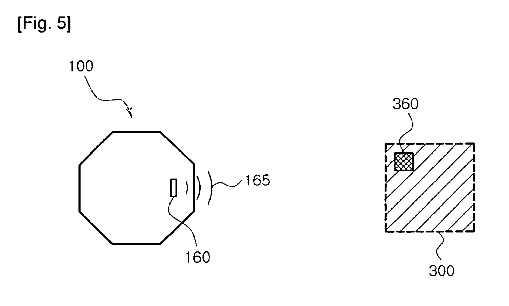

FIG. 5 is a view illustrating an example of detecting a movement of a moving object in the embodiment of the present invention;

As illustrated, the mobile apparatus 100 includes the radio detector as the object movement estimating unit 160 installed to detect a radio tag such as an RFID. In this case, the object movement detecting unit 160 detects the tag 360 attached to the object 300.

In this embodiment, the object movement estimating unit 160 determines whether position information of the tag 360 attached to the object 300 read from the environment map built by the environment map-building unit 180 is identical to position information of the tag 360 attached to the object 300, actually detected from a radio 165 outputted from the object movement estimating unit 160.

At that time, if the both position informations of the tag are different, the object movement estimating unit 160 determines that the object 300 moves from the position marked on the environment map.

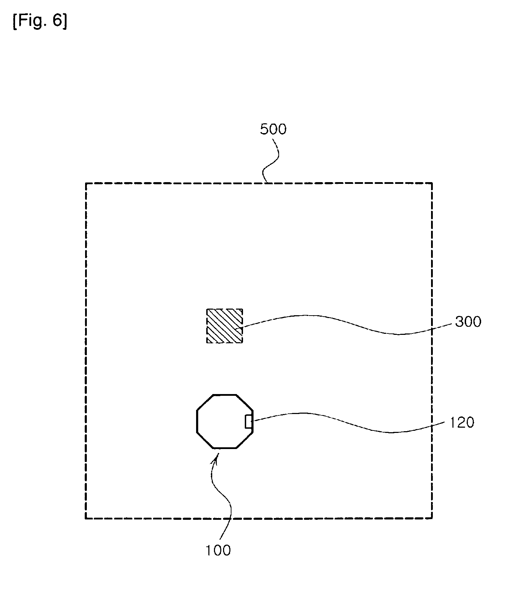

FIG. 6 is a view illustrating an example of renewing the built environment map by applying the changed environment information in the embodiment of the present invention.

As illustrated, when the environment information is changed due to the movement of the object 300, the controlling unit 110 controls the traveling unit 120 to travel the mobile apparatus 100 and controls the distance measuring unit 140 to measure a distance to the object 300. By doing so, the controlling unit 110 controls the environment map-building unit 180 to rebuild an environment map with respect to the space 500 changed based on the measuring distance information and to apply the newly built environment map to the existing built environment map.

In another embodiment of the present invention, when an command to modify the environment map is received from the user, the controlling unit 110 may update the environment map according to the inputted command.

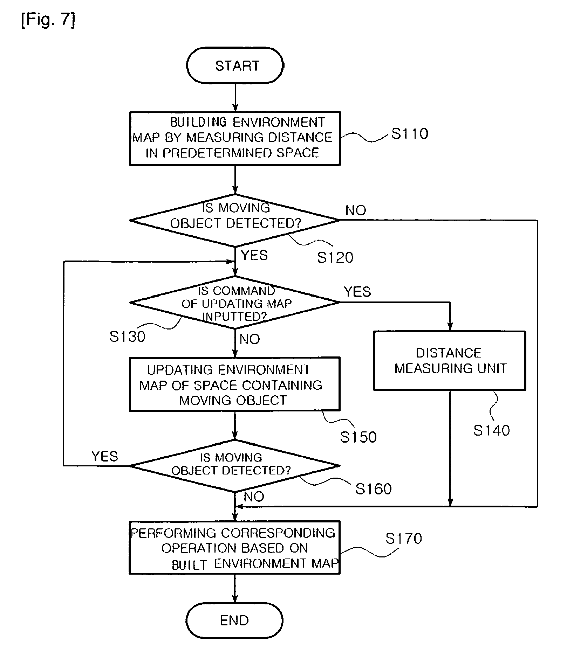

FIG. 7 is a flowchart illustrating a method of rapidly and precisely generating an environment map by adapting environmental change according to another embodiment of the present invention.

As illustrated, firstly, the controlling unit 110 controls the traveling unit 120 to move the mobile apparatus 100 and controls the distance measuring unit 140 to measure a distance of an object within a predetermined space. Moreover, the controlling unit 110 controls the mobile apparatus position measuring unit 170 to measure an absolute position of the mobile apparatus 100. By doing so, the controlling unit 110 controls the environment map-building unit 180 to build the environment map based on the distance measured by the distance measuring unit 140 and the absolute position measurement of the mobile apparatus 100 measured by the mobile apparatus position measuring unit 170 (S110).

After that, the controlling unit 110 controls the moving object detecting unit 150 to detect the moving object from whole area of the environment map by comparing the environment map built by the environment map-building unit 180 with the measurements measured by the distance measuring unit 140 within an area of the environment map after building the environment map (S120).

At this time, when the moving object is not detected in the area of the built environment map, the controlling unit 110 controls an operation of carrying out a corresponding performance based on the built environment map (S 170).

On the other hand, when the moving object is detected from the area of the environment map in the operation S120, the controlling unit 110 determines whether a command of updating the environment map is inputted through the user interface unit 130 (S130). At this time, when the updating command of the environment map is inputted, the controlling unit 110 controls the environment map building unit 180 to update the environment map built in the operation S 110 in accordance with the command inputted by the user (S140). After that, the controlling unit 110 controls an operation of carrying out a corresponding performance based on the environment map updated in the operation S 140 (S170).

On the other hand, when the updating command of the environment map is not inputted by the user in the operation S 130, the controlling unit 110 controls the traveling unit 100 and the distance measuring unit 140 to collect the environment information of the space where the moving object is positioned to update the environment map using the environment map-building unit 180 (S150).

After that, the controlling unit 110 controls the moving object movement estimating unit 160 to detect whether the moving object detected by the moving object detecting unit 150 is moved (S 160). When the moving object is moved, the controlling unit 110 carries out the operations S130 to S150.

When the moving object is not moved in the operation S160, the controlling unit controls an operation for carrying out a corresponding performance based on the environment map updated in the operation S150 (S170).

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Modifications and equivalents will be apparent to those skilled in the art and are encompassed within the scope of the appended claims.

## Claims

1. An apparatus for building an environment map of a mobile apparatus comprising:
a traveling unit (120) for traveling a mobile apparatus (100) in accordance with an inputted command;
a distance measuring unit (140) for measuring a distance between the mobile apparatus (100) and a moving object (300) located in the surroundings of the mobile apparatus (100);
an environment map-building unit (180) for building an environment map based on a distance value measured by the distance measuring unit (140);
a moving object detecting unit (150) for detecting a moving object (300) moved after building the environment map by comparing a distance between the mobile apparatus (100) and the moving object in the building environment map with the distance value newly measure by the distance measuring unit (140); and
a controlling unit (110) for selectively applying changed environment information containing the moving object to the building environment map when the moving object is detected to update the environment map in accordance with the inputted command,
wherein the apparatus further comprises an object movement detecting unit (160) for detecting the movement of a moving object using tag information in an area of the environment map, wherein the controlling unit (110) selectively applies the changed environment information containing the movement of the moving object to the building environment map when the movement of the moving object is detected, to update the environment map.

2. An apparatus for building an environment map of a mobile apparatus according to claim 1, further comprising a mobile apparatus position detecting unit (170) measuring reference position information of the mobile apparatus (100) in an area of the environment map, wherein the environment map-generating unit (180) builds the environment map with reference to the measured reference position information and the distance value measured by the distance measuring unit (140).

3. An apparatus for building an environment map of a mobile apparatus according to claim 1, wherein the distance measuring unit (140) comprises at least one of an ultrasonic sensor, an infrared sensor, and a laser sensor.

4. An apparatus for building an environment map of a mobile apparatus according to claim 1, wherein the object movement estimating unit (160) comprises a radio detector.

5. An apparatus for building an environment map of a mobile apparatus according to claim 3, wherein the mobile apparatus position measuring unit (170) comprises an artificial landmark detector.

6. An apparatus for building an environment map of a mobile apparatus according to claim 4, wherein at least any one of ultrasonic sensors and infrared sensors are disposed at an outer side of the mobile apparatus at a predetermined interval.

7. An apparatus for building an environment map of a mobile apparatus according to claim 4, wherein the laser sensor is disposed on an upper surface of the mobile apparatus.

8. An apparatus for building an environment map of a mobile apparatus according to claim 1, wherein the mobile apparatus is an autonomous mobile robot.

9. A method for building an environment map comprising:
measuring a distance between a mobile apparatus (100) and a moving object (300) positioned in the surroundings of the mobile apparatus while the mobile apparatus (100) travels in accordance with inputted command for building an environment map;
building a environment map based on the measured distance;
detecting a moving object moved by comparing a distance between the mobile apparatus and the moving object in the environment map with the distance newly measured after building the environment map; and
updating the environment map by applying the changed environment information containing the moving object (300) to the building environment map if the moving object (300) is detected, the method further comprising:
determining whether the moving object (300) has moved using tag information within an area of the environment map to which the changed environment information containing the moving object is applied and updated; and
updating the environment map by applying environment information indicating that the moving object is moved to the environment map when a movement of the moving object is detected.

10. A method for building an environment map according to claim 9, wherein the updating the environment map comprises: determining whether an updating command of the environment map is inputted by a user when the moving object is detected; and updating the environment map in accordance with the updating command inputted by the user when it is determined that the updating command is inputted.

11. A method of building an environment map according to claim 10, wherein the updating the environment map further comprises updating the environment map by applying changed environment information containing the moving object to the environment map when it is determined that the updating command is not inputted.

12. A method of building an environment map according to claim 9, further comprising measuring reference position information of the mobile apparatus (100) in a space where the environment map is built, wherein the environment map is built with reference to the measured reference position information of the mobile apparatus (100) and the measured distance.

## Patentansprüche

1. Vorrichtung zum Aufbauen einer Umgebungskarte einer mobilen Vorrichtung, die umfasst:
eine Bewegungseinheit (120) zum Bewegen einer mobilen Vorrichtung (100) in Übereinstimmung mit einem eingegebenen Befehl;
eine Streckenmesseinheit (140) zum Messen einer Strecke zwischen der mobilen Vorrichtung (100) und einem sich bewegenden Objekt (300), das sich in der Umgebung der mobilen Vorrichtung (100) befindet;
eine Umgebungskarten-Aufbaueinheit (180) zum Aufbauen einer Umgebungskarte anhand eines durch die Streckenmesseinheit (140) gemessenen Streckenwerts;
eine Bewegtobjekt-Detektionseinheit (150) zum Detektieren eines sich bewegenden Objekts (300), das bewegt wird, nachdem die Umgebungskarte aufgebaut worden ist, indem eine Strecke zwischen der mobilen Vorrichtung (100) und dem sich bewegenden Objekt in der aufgebauten Umgebungskarte mit dem Streckenwert verglichen wird, der erneut durch die Streckenmesseinheit (140) gemessen wird; und
eine Steuereinheit (110) zum wahlweisen Anwenden geänderter Umgebungsinformationen, die das sich bewegende Objekt enthalten, auf die aufgebaute Umgebungskarte, wenn das sich bewegende Objekt detektiert wird, um die Umgebungskarte in Übereinstimmung mit dem eingegebenen Befehl zu aktualisieren,
wobei die Vorrichtung ferner eine Objektbewegungs-Detektionseinheit (160) umfasst, um die Bewegung eines sich bewegenden Objekts unter Verwendung von Etikettinformationen in einem Bereich der Umgebungskarte zu detektieren, wobei die Steuereinheit (110) die geänderten Umgebungsinformationen, die die Bewegung des sich bewegenden Objekts enthalten, wahlweise auf die aufgebaute Umgebungskarte anwendet, wenn die Bewegung des sich bewegenden Objekts detektiert wird, um die Umgebungskarte zu aktualisieren.

2. Vorrichtung zum Aufbauen einer Umgebungskarte einer mobilen Vorrichtung nach Anspruch 1, die ferner eine Einheit (170) zum Detektieren der Position der mobilen Vorrichtung umfasst, um Referenzpositionsinformationen der mobilen Vorrichtung (100) in einem Bereich der Umgebungskarte zu messen, wobei die Umgebungskarten-Erzeugungseinheit (180) die Umgebungskarte mit Bezug auf die gemessenen Referenzpositionsinformationen und den durch die Streckenmesseinheit (140) gemessenen Streckenwert aufbaut.

3. Vorrichtung zum Aufbauen einer Umgebungskarte einer mobilen Vorrichtung nach Anspruch 1, wobei die Streckenmesseinheit (140) einen Ultraschallsensor und/oder einen Infrarotsensor und/oder einen Lasersensor umfasst.

4. Vorrichtung zum Aufbauen einer Umgebungskarte einer mobilen Vorrichtung nach Anspruch 1, wobei die Objektbewegungs-Schätzeinheit (160) einen Funkdetektor umfasst.

5. Vorrichtung zum Aufbauen einer Umgebungskarte einer mobilen Vorrichtung nach Anspruch 3, wobei die Einheit (170) zum Messen der Position der mobilen Vorrichtung einen Detektor für künstliche Orientierungspunkte umfasst.

6. Vorrichtung zum Aufbauen einer Umgebungskarte einer mobilen Vorrichtung (4), wobei an einer Außenseite der mobilen Vorrichtung in einem vorgegebenen Intervall Ultraschallsensoren und/oder Infrarotsensoren angeordnet sind.

7. Vorrichtung zum Aufbauen einer Umgebungskarte einer mobilen Vorrichtung nach Anspruch 4, wobei der Lasersensor an einer oberen Oberfläche der mobilen Vorrichtung angeordnet ist.

8. Vorrichtung zum Aufbauen einer Umgebungskarte einer mobilen Vorrichtung nach Anspruch 1, wobei die mobile Vorrichtung ein selbstständiger mobiler Roboter ist.

9. Verfahren zum Aufbauen einer Umgebungskarte, das umfasst:
Messen einer Strecke zwischen einer mobilen Vorrichtung (100) und einem sich bewegenden Objekt (300), das in der Umgebung der mobilen Vorrichtung positioniert ist, während sich die mobile Vorrichtung (100) in Übereinstimmung mit einem eingegebenen Befehl zum Aufbauen einer Umgebungskarte bewegt;
Aufbauen einer Umgebungskarte anhand der gemessenen Strecke;
Detektieren eines sich bewegenden Objekts, das bewegt wird, indem eine Strecke zwischen der mobilen Vorrichtung und dem sich bewegenden Objekt in der Umgebungskarte mit einer Strecke verglichen wird, die erneut gemessen wird, nachdem die Umgebungskarte aufgebaut worden ist; und
Aktualisieren der Umgebungskarte durch Anwenden der geänderten Umgebungsinformationen, die das sich bewegende Objekt (300) enthalten, auf die aufgebaute Umgebungskarte, falls das sich bewegende Objekt (300) detektiert wird, wobei das Verfahren ferner umfasst:
Bestimmen, ob sich das sich bewegende Objekt (300) bewegt hat, unter Verwendung von Etikettinformationen innerhalb eines Bereichs der Umgebungskarte, auf die die geänderten Umgebungsinformationen, die das sich bewegende Objekt enthalten, angewendet und aktualisiert werden; und
Aktualisieren der Umgebungskarte durch Anwenden von Umgebungsinformationen, die angeben, dass das sich bewegende Objekt bewegt wird, auf die Umgebungskarte; wenn eine Bewegung des sich bewegenden Objekts detektiert wird.

10. Verfahren zum Aufbauen einer Umgebungskarte nach Anspruch 9, wobei das Aktualisieren der Umgebungskarte umfasst: Bestimmen, ob ein Aktualisierungsbefehl für die Umgebungskarte von einem Anwender eingegeben wird, wenn das sich bewegende Objekt detektiert wird; und Aktualisieren der Umgebungskarte in Übereinstimmung mit dem von dem Anwender eingegebenen Aktualisierungsbefehl, wenn bestimmt wird, dass der Aktualisierungsbefehl eingegeben worden ist.

11. Verfahren zum Aufbauen einer Umgebungskarte nach Anspruch 10, wobei das Aktualisieren der Umgebungskarte ferner das Aktualisieren der Umgebungskarte durch Anwenden von geänderten Umgebungsinformationen, die das sich bewegende Objekt enthalten, auf die Umgebungskarte, umfasst, wenn bestimmt wird, dass der aktualisierte Befehl nicht eingegeben worden ist.

12. Verfahren zum Aufbauen einer Umgebungskarte nach Anspruch 9, das ferner das Messen von Referenzpositionsinformationen der mobilen Vorrichtung (100) in einem Raum, in dem die Umgebungskarte aufgebaut wird, umfasst, wobei die Umgebungskarte mit Bezug auf die gemessenen Referenzpositionsinformationen der mobilen Vorrichtung (100) und die gemessene Strecke aufgebaut wird.

## Revendications

1. Appareil de construction d'une carte d'environnement d'un appareil mobile comprenant :
une unité de déplacement (120) pour déplacer un appareil mobile (100) en conformité avec un ordre entré ;
une unité de mesure de distance (140) pour mesurer une distance entre l'appareil mobile (100) et un objet en mouvement (300) situé aux alentours de l'appareil mobile (100) ;
une unité de construction de carte d'environnement (180) pour construire une carte d'environnement en se basant sur une valeur de distance mesurée par l'unité de mesure de distance (140) ;
une unité de détection d'objet en mouvement (150) pour détecter un objet en mouvement (300) qui a bougé après la construction de la carte d'environnement en comparant une distance entre l'appareil mobile (100) et l'objet en mouvement dans la carte d'environnement de construction avec la valeur de distance nouvellement mesurée par l'unité de mesure de distance (140) ; et
une unité de commande (110) pour appliquer sélectivement une information d'environnement modifiée contenant l'objet en mouvement à la carte d'environnement en construction lorsque l'objet en mouvement est détecté pour mettre à jour la carte d'environnement en conformité avec l'ordre entré,
dans lequel l'appareil comprend en outre une unité de détection de mouvement d'objet (160) pour détecter le mouvement d'un objet en mouvement à l'aide d'une information d'étiquette dans une zone de la carte d'environnement, dans lequel l'unité de commande (110) applique sélectivement l'information d'environnement modifiée contenant le mouvement de l'objet en mouvement à la carte d'environnement en construction lorsque le mouvement de l'objet en mouvement est détecté, afin de mettre à jour la carte d'environnement.

2. Appareil de construction d'une carte d'environnement d'un appareil mobile selon la revendication 1, comprenant en outre une unité de détection de position d'appareil mobile (170) mesurant une information de position de référence de l'appareil mobile (100) dans une zone de la carte d'environnement, dans lequel l'unité de génération de carte d'environnement (180) construit la carte d'environnement en référence à l'information de position de référence mesurée et à la valeur de distance mesurée par l'unité de mesure de distance (140).

3. Appareil de construction d'une carte d'environnement d'un appareil mobile selon la revendication 1, dans lequel l'unité de mesure de distance (140) comprend au moins l'un d'un capteur ultrasonore, d'un capteur infrarouge et d'un capteur laser.

4. Appareil de construction d'une carte d'environnement d'un appareil mobile selon la revendication 1, dans lequel l'unité d'estimation de mouvement d'objet (160) comprend un détecteur radio.

5. Appareil de construction d'une carte d'environnement d'un appareil mobile selon la revendication 3, dans lequel l'unité de mesure de position d'appareil mobile (170) comprend un détecteur de points caractéristiques artificiels.

6. Appareil de construction d'une carte d'environnement d'un appareil mobile selon la revendication 4, dans lequel au moins l'un quelconque de capteurs ultrasonores et de capteurs infrarouges est disposé à un côté externe de l'appareil mobile à un intervalle prédéterminé.

7. Appareil de construction d'une carte d'environnement d'un appareil mobile selon la revendication 4, dans lequel le capteur laser est disposé sur une surface supérieure de l'appareil mobile.

8. Appareil de construction d'une carte d'environnement d'un appareil mobile selon la revendication 1, dans lequel l'appareil mobile est un robot mobile autonome.

9. Procédé de construction d'une carte d'environnement comprenant :
la mesure d'une distance entre un appareil mobile (100) et un objet en mouvement (300) positionné aux alentours de l'appareil mobile tandis que l'appareil mobile (100) se déplace en conformité avec un ordre entré pour construire une carte d'environnement ;
la construction d'une carte d'environnement en se basant sur la distance mesurée ;
la détection d'un objet en mouvement qui a bougé en comparant une distance entre l'appareil mobile et l'objet en mouvement dans la carte d'environnement avec la distance nouvellement mesurée après la construction de la carte d'environnement ; et
la mise à jour de la carte d'environnement en appliquant l'information d'environnement modifiée contenant l'objet en mouvement (300) à la carte d'environnement en construction si l'objet en mouvement (300) est détecté, le procédé comprenant en outre :
la détermination permettant de savoir si l'objet en mouvement (300) a bougé à l'aide d'informations d'étiquette à l'intérieur d'une zone de la carte d'environnement à laquelle l'information d'environnement modifiée contenant l'objet en mouvement est appliquée et mise à jour ; et
la mise à jour de carte d'environnement en appliquant l'information d'environnement indiquant que l'objet en mouvement a bougé à la carte d'environnement lorsqu'un mouvement de l'objet en mouvement est détecté.

10. Procédé de construction d'une carte d'environnement selon la revendication 9, dans lequel la mise à jour de la carte d'environnement comprend :
la détermination permettant de savoir si un ordre de mise à jour de la carte d'environnement est entré par un utilisateur lorsque l'objet en mouvement est détecté ; et la mise à jour de la carte d'environnement en conformité avec l'ordre de mise à jour entré par l'utilisateur lorsqu'il est déterminé que l'ordre de mise à jour est entré.

11. Procédé de construction d'une carte d'environnement selon la revendication 10, dans lequel la mise à jour de la carte d'environnement comprend en outre la mise à jour de la carte d'environnement en appliquant une information d'environnement modifiée contenant l'objet en mouvement à la carte d'environnement lorsqu'il est déterminé que l'ordre de mise à jour n'est pas entré.

12. Procédé de construction d'une carte d'environnement selon la revendication 9, comprenant en outre la mesure d'une information de position de référence de l'appareil mobile (100) dans un espace où la carte d'environnement est construite, dans lequel la carte d'environnement est construite en référence à l'information de position de référence mesurée de l'appareil mobile (100) et de la distance mesurée.
